(19) Europäisches Patentamt
European Patent Office
Office européen des brevets

(11) **EP 4 601 388 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
***H04W 72/54*** (2023.01)

(21) Application number: **23919540.7**

(22) Date of filing: **25.12.2023**

(86) International application number:
**PCT/CN2023/141682**

(87) International publication number:
**WO 2024/159978 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2023 CN 202310129586**

(71) Applicant: **ZTE Corporation**
**Shenzhen, Guangdong 518057 (CN)**

(72) Inventors:
- **BIAN, Luanjian**
  **Shenzhen, Guangdong 518057 (CN)**
- **DAI, Bo**
  **Shenzhen, Guangdong 518057 (CN)**
- **HU, Youjun**
  **Shenzhen, Guangdong 518057 (CN)**
- **YANG, Weiwei**
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **PHYSICAL CHANNEL PROCESSING METHOD AND APPARATUS, AND STORAGE MEDIUM**

(57) Provided are a physical channel processing method and apparatus, and a storage medium. The physical channel processing method comprises: acquiring scheduling information of a plurality of physical channels, wherein the scheduling information of the physical channels comprises at least one of a time domain position, a bandwidth, and a channel type of each physical channel; and according to the scheduling information of the plurality of physical channels, determining from the plurality of physical channels a physical channel to be processed.

FIG. 1

Acquire scheduling information of a plurality of physical channels — S101

According to the scheduling information of the plurality of physical channels, determine from the plurality of physical channels a physical channel to be processed — S102

FIG. 2

**Description**

The present disclosure claims a priority of Chinese Patent Application No. 202310129586.0, filed on January 31, 2023, the entire content of which is incorporated into this application by reference.

TECHNICAL FIELD

The present disclosure relates to the field of communication technologies, and in particular, to a physical channel processing method, an apparatus, and a storage medium.

BACKGROUND

In 5G new radio (NR), a reduced capability user equipment (RedCap UE) with a Release-18 version has a data caching capability of up to 20 MHz bandwidth and a physical downlink shared channel (PDSCH) data processing capability of up to 5 MHz bandwidth. That is, a processing bandwidth of the Release-18 RedCap UE for PDSCH is reduced, and a maximum bandwidth supported is 5 MHz. Then, in a case where the Release-18 RedCap UE caches PDSCH data with a bandwidth greater than 5 MHz, the PDSCH data needs to be processed multiple times, and data with 5 MHz bandwidth is processed each time.

SUMMARY

In an aspect, embodiments of the present disclosure provide a physical channel processing method, which is applied to a receiving end. The physical channel processing method includes:

    acquiring scheduling information of a plurality of physical channels, where the scheduling information of the physical channel includes at least one of a time domain position, a bandwidth and a channel type of the physical channel; and
    determining a physical channel to be processed from the plurality of physical channels according to the scheduling information of the plurality of physical channels.

In another aspect, the embodiments of the present disclosure provide a physical channel transmission method, which is applied to a transmitting end. The physical channel transmission method includes:

    transmitting scheduling information of a physical channel, where the scheduling information of the physical channel includes at least one of a time domain position, a bandwidth, and a channel type of the physical channel; and
    transmitting the physical channel based on the scheduling information.

In yet another aspect, the embodiments of the present disclosure provide a physical channel resource mapping method. The physical channel resource mapping method includes:

    determining at least two resource block groups (RBGs), where a first RBG and a second RBG of the at least two RBGs are spaced by h RBGs, and h is greater than or equal to 1; and
    mapping a physical channel onto the at least two RBGs mentioned above.

In yet another aspect, the embodiments of the present disclosure provide a physical channel processing apparatus, which is applied to a receiving end. The physical channel processing apparatus includes a communication module and a processing module.

The communication module is configured to acquire scheduling information of a plurality of physical channels, where the scheduling information of the physical channel includes at least one of a time domain position, a bandwidth and a channel type of the physical channel.

The processing module is configured to determine a physical channel to be processed from the plurality of physical channels according to the scheduling information of the plurality of physical channels.

In yet another aspect, the embodiments of the present disclosure provide a physical channel transmission apparatus, which is applied to a transmitting end. The physical channel transmission apparatus includes a communication module and a processing module.

The processing module is configured to acquire scheduling information of a physical channel.

The communication module is configured to transmit the scheduling information of the physical channel, and the scheduling information of the physical channel includes at least one of a time domain position, a bandwidth and a channel type of the physical channel.

The communication module is further configured to transmit the physical channel based on the scheduling information.

In yet another aspect, the embodiments of the present disclosure provide a physical channel resource mapping apparatus. The physical channel resource mapping apparatus includes:

    a processing module is configured to determine at least two resource block groups (RBGs), where a first RBG and a second RBG of the at least two RBGs are spaced by h RBGs, and h is greater than or equal to 1; and
    a mapping module is configured to map a physical channel onto the above-mentioned at least two RBGs.

In yet another aspect, the embodiments of the present disclosure provide a communication apparatus.

The communication apparatus includes a memory and a processor. The memory is coupled to the processor; the memory is configured to store computer program instructions executable by the processor; and the processor, upon executing the computer program instructions, implements the physical channel processing method described in any one of the above embodiments.

In yet another aspect, the embodiments of the present disclosure provide a computer-readable storage medium. The computer-readable storage medium has stored computer program instructions thereon, and the computer program instructions, when executed on a computer (e.g., the communication apparatus or the physical channel processing apparatus), implement the physical channel processing method described in any one of the above embodiments.

In yet another aspect, the embodiments of the present disclosure provide a computer program product. The computer program product includes computer program instructions, and the computer program instructions, when executed, implement the physical channel processing method described in any one of the above embodiments.

BRIEF DESCRIPTION OF THE DRAWINGS

FIG. 1 is a schematic diagram of an architecture of a communication system according to some embodiments.

FIG. 2 is a flow chart of a physical channel processing method according to some embodiments.

FIG. 3 is a schematic diagram of time domain positions of physical channels according to some embodiments.

FIG. 4 is another schematic diagram of time domain positions of physical channels according to some embodiments.

FIG. 5 is a flow chart of a physical channel transmission method according to some embodiments.

FIG. 6 is a flow chart of a physical channel resource mapping method according to some embodiments.

FIG. 7 is a schematic diagram of a physical channel processing apparatus according to some embodiments.

FIG. 8 is a schematic diagram of a physical channel transmission apparatus according to some embodiments.

FIG. 9 is a schematic diagram of a physical channel resource mapping apparatus according to some embodiments.

FIG. 10 is a structural schematic diagram of a communication apparatus according to some embodiments.

DETAILED DESCRIPTION

To enable those skilled in the art to better understand the technical solutions of the embodiments of the present disclosure, the technical solutions in the embodiments of the present disclosure will be described clearly and completely below in conjunction with the drawings in the embodiments of the present disclosure. It is obvious that the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

In the description of the present disclosure, unless otherwise specified, "/" means "or", and for example, A/B may represent A or B. The term "and/or" herein merely describes an associated relationship between associated objects, and represents that three relationships may exist, and for example, "A and/or B" may represent: only A, only B, or both A and B. In addition, "at least one" means one or more, and "a/the of plurality / multiple" means two or more. The words, such as "first" and "second", do not limit a number and an execution order, and the words, such as "first" and "second", do not necessarily define the existence of differences between them.

It should be noted that in the present disclosure, the expressions such as "exemplarily" or "for example", etc., are used to provide examples, illustrations, or explanations / descriptions. Any embodiment or designed solution described as "exemplarily" or "for example" in the present disclosure should not be interpreted as being more preferred or advantageous than other embodiments or designed solutions. Rather, the use of the expressions such as "exemplarily" or "for example" is intended to present related concepts in detail.

Technical solutions provided by the embodiments of the present disclosure may be applied to various mobile communication networks, such as new radio (New Radio, NR) mobile communication networks using the fifth generation mobile communication technology (5th generation mobile networks, 5G), future mobile communication networks or multi-communication fusion systems, which is not limited in the embodiments of the present disclosure.

A network architecture of a mobile communication network (including but not limited to 3G, 4G, 5G and future mobile communication networks) in the embodiments of the present disclosure may include network side devices (for example, including but not limited to a base station) and receiving side devices (for example, including but not limited to a terminal). Also, it should be understood that in the embodiments of the present disclosure, a first node (also referred to as a first communication node device) may be a receiving side device, and a second node (also referred to as a second communication node device) may be a network side device. Alternatively, the first node may be a network side device, and the second node may be a receiving side device. Yet alternatively, in device-to-device communication, both the first node and the second node may be base stations or terminals.

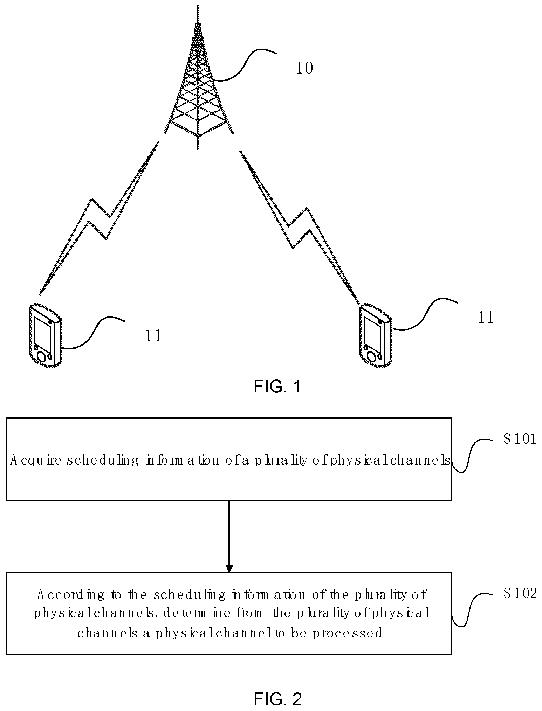

Exemplarily, the network side device being a base station and the receiving side device being a terminal is taken as an example. FIG. 1 illustrates a structural schematic diagram of a communication system according to some embodiments. The communication system may include a base station 10 and one or more terminals 11, and the base station 10 may be communicatively connected to the one or more terminals 11.

The base station 10 may be used to implement functions such as resource scheduling, radio resource management and radio access control of the terminals. For example, the base station may be any one of a small base station, a radio access point, a receiving and transmitting point (transmission receive point, TRP), a transmission point (TP), and some other access nodes.

The terminal 11 may also be referred to as a terminal device, a user equipment, a mobile station, a mobile terminal, etc. Exemplarily, the terminal may be a mobile phone, a tablet computer, a computer with a wireless transceiver function, a virtual reality terminal, an augmented reality terminal, a wireless terminal in industrial control, a wireless terminal in autonomous driving, a wireless terminal in remote surgery, a wireless terminal in transportation safety, a wireless terminal in a smart city, or a wireless terminal in a smart home, etc. The embodiments of the present disclosure do not limit the device form used for the terminal.

It should be noted that FIG. 1 is only an exemplary frame diagram, and the number of devices included in FIG. 1 and names of the devices are not limited. In addition to the devices shown in FIG. 1, the communication system may also include other devices, such as core network devices.

The embodiments of the present disclosure do not limit application scenarios. The system architecture and traffic scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the network architecture and the emergence of new traffic scenarios, the technical solutions provided in the embodiments of the present disclosure are also applicable to similar technical problems.

Exemplary embodiments of the present disclosure provide a physical channel processing method, which is applied to a receiving end, as shown in FIG. 2. The physical channel processing method may include the following steps.

S101, a receiving end acquires scheduling information of a plurality of physical channels.

In some embodiments, the receiving end may be a first-type communication node. In the embodiments of the present disclosure, a communication node may be classified into a first-type communication node or a second-type communication node. A processing bandwidth of the physical channel supported by the first-type communication node is less than a processing bandwidth of the physical channel supported by the second-type communication node.

For example, the processing bandwidth supported by the first-type communication node is less than or equal to 5 MHz, and the processing bandwidth supported by the second-type communication node is greater than 5 MHz.

For another example, the processing bandwidth of the physical channel of the first-type communication node at a 15 KHz subcarrier spacing is 25 physical resource blocks (PRBs); and the processing bandwidth of the physical channel of the second-type communication node at the 15 KHz subcarrier spacing is greater than 25 physical resource blocks.

For yet another example, the processing bandwidth of the physical channel of the first-type communication node at a 30 kHz subcarrier spacing is 12 or 11 physical resource blocks. The processing bandwidth of the physical channel of the second-type communication node at the 30 kHz subcarrier spacing is greater than 12 or 11 physical resource blocks.

In an example, the communication node described above may be a base station or a terminal, which is not limited thereto.

In some embodiments, the plurality of physical channels described above may come from a same transmitting end, or may also come from different transmitting ends, which is not limited thereto.

In some embodiments, the plurality of physical channels conflict with each other in a time domain.

As an example, in a case where the plurality of physical channels include a first physical channel and a second physical channel, and the first physical channel and the second physical channel are transmitted in a same time slot, it is determined that there is a conflict between the first physical channel and the second physical channel in the time domain.

As another example, in a case where the plurality of physical channels include a first physical channel and a second physical channel, and a processing duration of the first physical channel overlaps with a transmission duration of the second physical channel, it is determined that there is a conflict between the first physical channel and the second physical channel in the time domain.

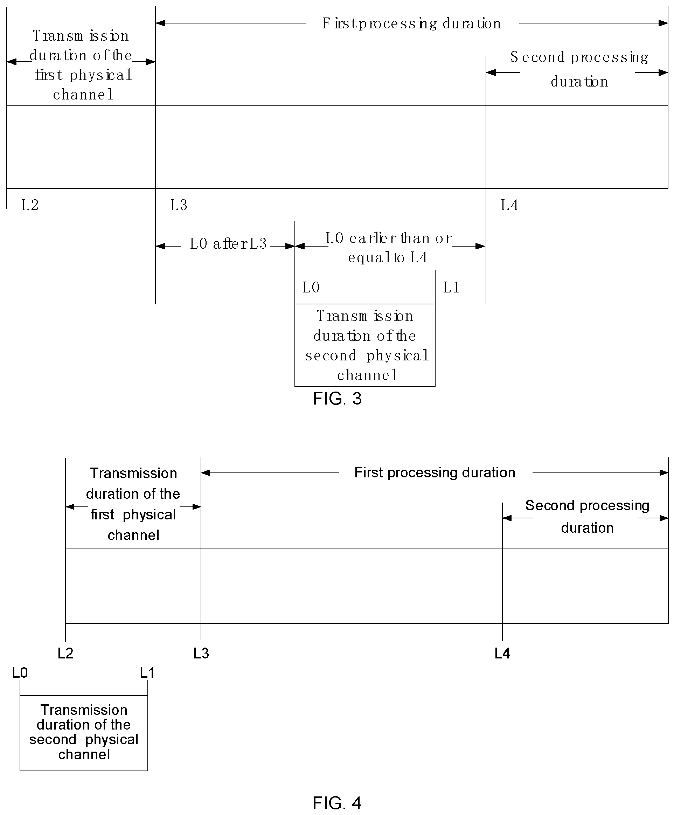

Exemplarily, as shown in FIG. 3, a starting symbol for a transmission of the second physical channel is symbol L0, and an ending symbol for the transmission of the second physical channel is symbol L1. A starting symbol for a transmission of the first physical channel is symbol L2, and an ending symbol for the transmission of the first physical channel is symbol L3. In a case where a bandwidth of the first physical channel is greater than a target bandwidth, a starting symbol of a first processing duration is a first symbol after the symbol L3, and an ending symbol of the first processing duration is symbol L4. Referring to FIG. 3, in a case where the starting symbol L0 of the second physical channel is later than the ending symbol L3 of the first physical channel, the starting symbol L0 of the second physical channel is earlier than or equal to the reference symbol L4, and the starting symbol L0 of the second physical channel and the ending symbol L3 of the first physical channel are not in a same time slot, the processing duration of the first physical channel overlaps with the transmission duration of the second physical channel, and it is determined that there is a conflict between the first physical channel and the second physical channel in the time domain. The first processing duration may be a duration of processing a physical channel by the first-type communication node.

In some embodiments, the target bandwidth may be a maximum processing bandwidth supported by the communication node for the physical channel. Exemplarily, the target bandwidth is 25 PRBs at the 15 KHz subcarrier spacing, and 11 PRBs or 12 PRBs at the 30 KHz subcarrier spacing.

As another example, in a case where the plurality of physical channels include the first physical channel and the second physical channel, and the transmission duration or the processing duration of the first physical channel overlaps with the transmission duration of the second physical channel, it is determined that there is a conflict between the first physical channel and the second physical channel in the time domain.

Exemplarily, as shown in FIG. 4, the starting symbol for a transmission of the second physical channel is symbol L0, and the ending symbol for the transmission of the second physical channel is symbol L1. The starting symbol for a transmission of the first physical channel is symbol L2, and the ending symbol for the transmission of the first physical channel is symbol L3. Referring to FIG. 4, in a case where the starting symbol L0 of the second physical channel is earlier than or equal to the reference symbol L4, and the ending symbol L1 of the second physical channel is later than or equal to the starting symbol L2 of the first physical channel, the transmission duration of the first physical channel overlaps with the transmission duration of the second physical channel, and it is determined that there is a conflict between the first physical channel and the second physical channel in the time domain.

In some embodiments, the scheduling information of the physical channel includes at least one of a time domain position, a bandwidth, and a channel type of the physical channel.

In some embodiments, the time domain position of the physical channel may be understood as a symbol(symbols) occupied by the physical channel in the time domain. As an example, the time domain position of the physical channel may indicate a starting symbol and a duration of the physical channel. As an example, the symbol may be an orthogonal frequency division multiplexing (Orthogonal Frequency Division Multiplexing, OFDM) symbol.

In some embodiments, the channel type includes at least one of a system information block (SIB), a terminal-specific physical shared channel, a physical shared channel for paging, message 4 (Message 4, Msg4), and a random access response (RAR).

The system information block is used to carry system information. Exemplarily, the system information block includes system information block 1 (SIB 1) to system information block P (SIB P), where P is greater than 1. SIB 1 includes availability or scheduling information about other SIBs. SIB 6 includes a primary notification of an earthquake and tsunami warning system (ETWS). SIB 7 includes a secondary notification of the ETWS. SIB 8 includes an alert notification of a commercial mobile alert system (CMAS).

The terminal-specific physical shared channel is used to transmit uplink data or downlink data for a single terminal.

The physical shared channel for paging is used to transmit data related to an intended paging process.

The message 4 is downlink information sent by the base station to the terminal during a random access process.

The random access response is used to carry a random access response message.

The bandwidth is a frequency domain width of the physical channel per unit of time. The bandwidth of the physical channel may be represented in Hertz or may also be characterized by the number of physical resource blocks occupied by the physical channel. As an example, in a case where the physical channel includes at least two PDSCHs, the bandwidth of the physical channel is a sum of bandwidths of the at least two PDSCHs.

The physical shared channel may be a physical uplink shared channel or a physical downlink shared channel, which is not limited thereto.

S102, the receiving end determines a physical channel to be processed from the plurality of physical channels according to the scheduling information of the plurality of physical channels.

In some embodiments, the physical channel to be processed may be understood as a physical channel of which the processing needs to be prioritized among the plurality of physical channels. Alternatively, the physical channel to be processed may be understood as a physical channel that is processed first among the plurality of physical channels.

In some embodiments, the importance of information carried by the physical channel to be processed may be higher than the importance of information carried by other physical channels among the plurality of physical channels except the physical channel to be processed.

In some embodiments, the number of physical channels to be processed may be one or more, which is not limited thereto.

In some embodiments, after the physical channel to be processed is determined, the receiving end may start to process the physical channel to be processed.

In some embodiments, for physical channels not to be processed among the plurality of physical channels, the receiving end may abandon these physical channels not to be processed.

In some embodiments, for the physical channels not to be processed among the plurality of physical channels, the receiving end may process these physical channels not to be processed after the completion of processing the physical channel to be processed.

It is taken as an example that the plurality of physical channels include the first physical channel and the second physical channel, and the receiving end may adopt the following processing solutions.

Solution 1: the receiving end may process the first physical channel first, and then process the second physical channel.

Solution 2: the receiving end may process the second physical channel first, and then process the first physical channel.

Solution 3: the receiving end may process the first physical channel, and abandon processing the second physical channel.

Solution 4: the receiving end may process the second physical channel, and abandon processing the first physical channel.

It should be understood that the receiving end may determine a processing solution to be adopted, according to the scheduling information of the first physical channel and the scheduling information of the second physical channel.

In the embodiments of the present disclosure, in a case where the receiving end cannot process the plurality of physical channels at the same time, the receiving end may select a suitable physical channel to be processed from the plurality of physical channels based on the scheduling information of the plurality of physical channels, to prioritize the processing of the physical channel to be processed, and ensure that the receiving end can acquire important information carried by the physical channel to be processed in time, thereby ensuring normal communication of the communication system.

For different situations of time domain positions of the plurality of physical channels, the following exemplarily illustrates implementations in which the receiving end determines the physical channel to be processed from the plurality of physical channels.

Implementation 1: in a case where the plurality of physical channels are transmitted in a same time slot, the receiving end determines a processing order of the plurality of physical channels according to bandwidths or channel types of the plurality of physical channels. The receiving end determines the physical channel to be processed from the plurality of physical channels according to the processing order of the plurality of physical channels.

In some embodiments, the physical channel to be processed may include first N physical channels in the processing order of the plurality of physical channels, where N is a positive integer. A value of N is mainly determined by considering a processing capability of the receiving end and the bandwidths of the physical channels. Exemplarily, the physical channel to be processed may be a first physical channel in the processing order of the plurality of physical channels.

As an example, the processing order of the plurality of physical channels is determined according to a monotonically increasing order or a monotonically decreasing order of the bandwidths of the plurality of physical channels.

For example, the plurality of physical channels include channel #1, channel #2, and channel #3. A bandwidth of channel #1 is 11 PRBs, a bandwidth of channel #2 is 20 PRBs, and a bandwidth of channel #3 is 12 PRBs. If the processing order of the plurality of physical channels is determined by the monotonically increasing order of the bandwidths of the plurality of physical channels, the processing order of the plurality of physical channels described above is: channel #1, channel #3, channel #2 in sequence.

For another example, the plurality of physical channels include channel #1, channel #2, and channel #3. The bandwidth of channel #1 is 11 PRBs, the bandwidth of channel #2 is 20 PRBs, and the bandwidth of channel #3 is 12 PRBs. If the processing order of the plurality of physical channels is determined by the monotonically decreasing order of the bandwidths of the plurality of physical channels, the processing order of the plurality of physical channels described above is: channel #2, channel #3, channel #1 in sequence.

As another example, in a case where the processing order of the plurality of physical channels is determined according to the channel types of the plurality of physical channels, the processing order of the plurality of physical channels satisfies at least one of the following rules.

Rule 1: the terminal-specific physical shared channel is prioritized over the system information block in the processing order.

Rule 2: the physical shared channel for paging is prioritized over the system information block in the processing order.

Rule 3: the message 4 is prioritized over the system information block in the processing order.

Rule 4: the random access response is prioritized over the system information block in the processing order.

It should be understood that in general, due to a low update frequency of the information carried by the system information block, the receiving end generally has stored the information carried by the system information block, and therefore the receiving end may not be in a hurry to acquire the information of the system information block. In addition, even if the system information block carries updated information, since the transmitting end may periodically transmit the system information block, the receiving end may also acquire the updated information from a next system information block, so that the receiving end may not be in a hurry to process the current system information block. For the reasons stated above, the system information block may be located after other information in the processing order.

As another example, in a case where the receiving end has a capability to receive warning information and the processing order of the plurality of physical channels is determined according to the channel types of the plurality of physical channels, the processing order of the plurality of physical channels satisfies at least one of the following rules.

Rule 5: in a case where a short message received by the receiving end indicates the receiving end to receive the warning information, system information block 1 is prioritized over any one of the terminal-specific physical shared channel, the physical shared channel for paging, the message 4 and the random access response in the processing order.

Rule 6: system information block 6, system information block 7 and system information block 8 is prioritized over any one of the terminal-specific physical shared channel, the physical shared channel for paging, the message 4 and the random access response in the processing order.

In some embodiments, the warning information may include an earthquake and tsunami warning system (ETWS) message or a commercial mobile alert system (CMAS) message.

It should be understood that in scenarios where an earthquake, tsunami or other disasters may occur, the receiving end can acquire disaster-related information in time based on Rule 5 and Rule 6, to prompt users, thereby ensuring safety of lives and properties of the users.

In some embodiments, in a case where the processing order of the plurality of physical channels is determined based on the channel types of the plurality of physical channels, Rule 5 and Rule 6 may be considered first, followed by Rule 1 to Rule 4.

Exemplarily, in a case where the plurality of physical channels include a first physical channel and a second physical channel, and the first physical channel includes a system information block and the second physical channel includes a UE-specific PDSCH, the second physical channel is prioritized to be processed, followed by the first physical channel.

Exemplarily, in a case where the plurality of physical channels include a first physical channel and a second physical channel, and the first physical channel includes an SIB and the second physical channel includes a paging PDSCH, the second physical channel is prioritized to be processed, followed by the first physical channel.

sical channel.

For example, in a case where the plurality of physical channels include a first physical channel and a second physical channel, and the first physical channel includes an SIB and the second physical channel includes an RAR, the second physical channel is prioritized to be processed, followed by the first physical channel.

Exemplarily, in a case where the plurality of physical channels include a first physical channel and a second physical channel, and the first physical channel includes an SIB and the second physical channel includes Msg4, the second physical channel is prioritized to be processed, followed by the first physical channel.

Based on this, in a case where the plurality of physical channels are transmitted in a same time slot, the plurality of physical channels are sorted according to bandwidths or channel types of the plurality of physical channels, and then the plurality of physical channels are processed sequentially in the sorted order according to the sorted result.

In a case where the plurality of physical channels are transmitted in the same time slot and a total bandwidth of the plurality of physical channels is greater than a bandwidth that the communication node can process, the processing of some physical channels may also be abandoned according to the sorted result. In this way, a backlog in the processing of the physical channels is avoided, and the processing efficiency of the physical channels is improved.

Implementation 2: in a case where the plurality of physical channels include the first physical channel and the second physical channel, and the bandwidth of the first physical channel is greater than a target bandwidth, if a starting symbol of the second physical channel is later than an ending symbol of the first physical channel, the starting symbol of the second physical channel is earlier than or equal to a reference symbol, and the starting symbol of the second physical channel and the ending symbol of the first physical channel are not in a same time slot, it is determined to process the first physical channel, or determined to abandon the second physical channel.

The reference symbol is a K-th symbol after the ending symbol of the first physical channel, a value of K is determined according to the first processing duration of the first physical channel and the second processing duration of the first physical channel, and K is a positive integer.

For example, assuming that the ending symbol L3 of the first physical channel is the 10-th symbol, the first processing duration N is 20 symbols, and the second processing duration is 8 symbols, the value of K is equal to 12. Therefore, the reference symbol L4 is the 12-th symbol after the 10-th symbol. That is, the reference symbol L4 is the 22-nd symbol.

The first processing duration of the physical channel is a duration of processing the physical channel by the first-type communication node, and the second processing duration of the physical channel is a duration of processing the physical channel by the second-type communication node. In the 5G New Radio (NR) technology, the second processing duration of the physical channel may be determined according to some technologies, which will not be described here.

Implementation 3: in a case where the plurality of physical channels include the first physical channel and the second physical channel, and a bandwidth of the first physical channel is greater than a target bandwidth, if a starting symbol of the second physical channel is later than an ending symbol of the first physical channel, the starting symbol of the second physical channel is earlier than or equal to the reference symbol, and the starting symbol of the second physical channel and the ending symbol of the first physical channel are not in a same time slot, the physical channel to be processed or a physical channel to be abandoned is determined from the first physical channel and the second physical channel according to a channel type of the first physical channel and a channel type of the second physical channel.

Implementation 4: in a case where the plurality of physical channels include the first physical channel and the second physical channel, and the bandwidth of the first physical channel is greater than the target bandwidth, if the starting symbol of the second physical channel is earlier than or equal to the reference symbol, and the ending symbol of the second physical channel is later than or equal to the starting symbol of the first physical channel, the physical channel to be processed or the physical channel to be abandoned is determined from the first physical channel and the second physical channel according to the channel type of the first physical channel and the channel type of the second physical channel.

In this way, the detailed implementations of determining the physical channel prioritized to be processed from the first physical channel and the second physical channel according to the channel type of the first physical channel and the channel type of the second physical channel, are preset. These avoid data loss caused by the conflict between the processing of the plurality of physical channels.

In some embodiments, determining the physical channel to be processed or the physical channel to be abandoned from the first physical channel and the second physical channel according to the channel type of the first physical channel and the channel type of the second physical channel, may be for example implemented as follows:

in a case where the first physical channel includes a system information block, and the second physical channel includes any one of a terminal-specific physical shared channel, a physical shared channel for paging, message 4 and a random access response, determining to process the second physical channel or determining to abandon the first physical channel; or

in a case where the first physical channel includes the physical shared channel for paging, and the second physical channel includes the terminal-specific physical shared channel or the system information block, determining to process the first physical channel or determining to abandon the second physical channel; or

in the first physical channel includes the random access response or the message 4, the second physical channel includes the terminal-specific physical shared channel or the system information block, determining to process the first physical channel or determining to abandon the second physical channel.

In some embodiments, the receiving end has a capability to receive the warning information; and determining the physical channel to be processed or the physical channel to be abandoned from the first physical channel and the second physical channel according to the channel type of the first physical channel and the channel type of the second physical channel, may be for example implemented as follows:

in a case where a short message received by the receiving end indicates the receiving end to receive the warning information, in response that the first physical channel includes system information block 1, and the second physical channel includes any one of a terminal-specific physical shared channel, a physical shared channel for paging, message 4 and a random access response, determining to prioritize the processing of the first physical channel or determining to abandon the second physical channel; or

in a case where a short message received by the receiving end indicates the receiving end to receive the warning information, in response that the first physical channel includes any one of a terminal-specific physical shared channel, a physical shared channel for paging, message 4 and a random access response, and the second physical channel includes system information block 1, determining to prioritize the processing of the second physical channel or determining to abandon the first physical channel; or

in response that the first physical channel includes system information block 6, system information block 7 or system information block 8, and the second physical channel includes any one of a terminal-specific physical shared channel, a physical shared channel for paging, message 4, and a random access response, determining to prioritize the processing of the first physical channel or determining to abandon the second physical channel; or

in response that the first physical channel includes any one of a terminal-specific physical shared channel, a physical shared channel for paging, message 4 and a random access response, and the second physical channel includes system information block 6, system information block 7 or system information block 8, determining to prioritize the processing of the second physical channel or determining to abandon the first physical channel.

Implementation 5: in a case where the plurality of physical channels include the first physical channel and the second physical channel, and the bandwidth of the first physical channel is less than or equal to the target bandwidth, if the processing duration of the first physical channel overlaps with the transmission duration of the second physical channel, it is determined that the first physical channel is prioritized to be processed, followed by the second physical channel (that is, the processing of the second physical channel may not be abandoned).

In a case where the receiving end is a first-type communication node and the bandwidth of the first physical channel is less than or equal to the target bandwidth, the processing duration of the first physical channel may be a time period with a starting point of the ending symbol of the first physical channel and a duration of the first processing duration.

In a case where the bandwidth of the first physical channel is less than or equal to the target bandwidth, the first processing duration and the second processing duration of the first physical channel are the same. In this way, referring to FIG. 3, the ending symbol L3 of the first physical channel and the reference symbol L4 are the same symbol.

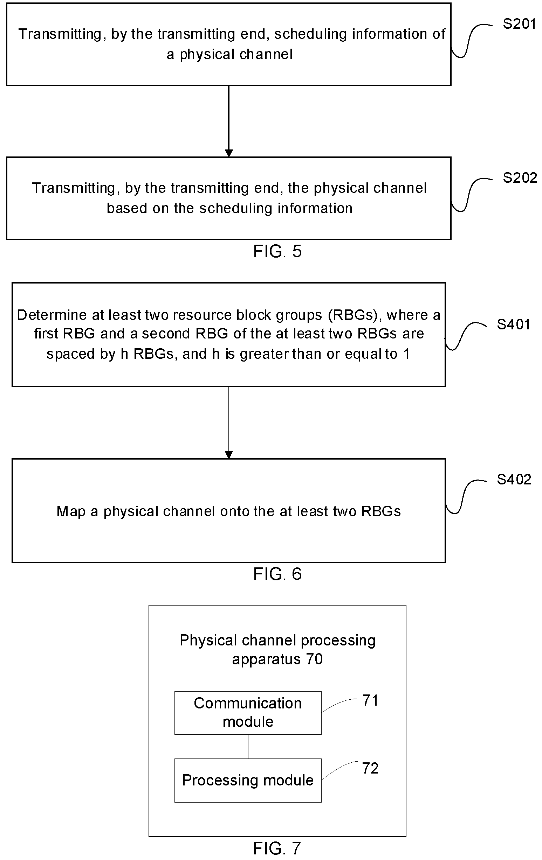

FIG. 5 is a flow chart of a physical channel processing method according to some embodiments, which is applied to a transmitting end. As shown in FIG. 5, the physical channel processing method may include S201 and S202.

S201, the transmitting end transmits scheduling information of a physical channel.

The transmitting end may be a terminal device, a user equipment, a mobile station, a mobile terminal, etc. The scheduling information of the physical channel includes at least one of a time domain position, a bandwidth and a channel type of the physical channel.

In S202, the transmitting end transmits the physical channel based on the scheduling information.

Implementations and embodiments of S201 and S202 may refer to the implementations and the embodiments of the physical channel processing method at the receiving end described above.

The embodiments of the present disclosure also provide a method for determining a first processing duration, which may be applied to the receiving end or the transmitting end. The method includes the following steps.

S301, determine a first processing duration of the physical channel according to at least one of a second processing duration of the physical channel, the bandwidth of the physical channel, a number of receiving antennas of a first-type communication node, a subcarrier spacing, a code rate and a high-layer parameter.

As an example, the high-layer parameter is transmitted in SIB1 or SIB.

In some embodiments, the first processing duration may be determined according to scheme 1 or scheme 2.

Scheme 1: the first processing duration is determined according to a product of the second processing duration and an adjustment coefficient, and the adjustment coefficient is determined according to the bandwidth of the physical channel and a target bandwidth.

In some embodiments, the adjustment coefficient is a value obtained by rounding up a quotient of the target bandwidth divided by the bandwidth of the physical channel. That is, the adjustment coefficient is $\left\lceil \frac{R}{B} \right\rceil$. R is the bandwidth of the physical channel and B is the target bandwidth.

For example, the first processing duration $N = \left\lceil \frac{R}{B} \right\rceil * M$, where M is the second processing duration.

Scheme 2: the first processing duration is equal to a sum of the second processing duration and a third processing duration. In an example, the first processing duration N=M+t, M is the second processing duration, and the third processing duration t is greater than or equal to 0.

The third processing duration t is determined according to at least one of the bandwidth of the physical channel, the number of receiving antennas, the subcarrier spacing, the code rate and the high-layer parameter.

In some embodiments, in a case where the bandwidth of the physical channel is less than or equal to the target bandwidth, the third processing duration is equal to zero.

In some embodiments, in a case where the bandwidth of the physical channel is greater than the target bandwidth, the third processing duration is determined according to a product of a preset duration and an adjustment coefficient, and the adjustment coefficient is determined according to the bandwidth of the physical channel and the target bandwidth.

Exemplarily, $t = \left\lceil \frac{R}{B} \right\rceil * a$, t represents the third processing duration, and a represents the preset duration. Exemplarily, a value of the preset duration may be a fixed value, or may be indicated by a high-layer parameter.

In some embodiments, in a case where the bandwidth of the physical channel is greater than the target bandwidth, the third processing duration is determined according to the bandwidth of the physical channel.

Exemplarily, determining the third processing duration according to the bandwidth of the physical channel, at least includes one of the following four determination schemes.

It is assumed that the number of physical resource blocks occupied by the physical channel is A, and the number of physical resource blocks included in the target bandwidth is B.

Determination scheme 1: in a case where A≤B, t=0; in a case where B<A≤C, t=t1. C is the number of physical resource blocks (PRBs) included in a bandwidth part (BWP), and t1 is the preset duration.

Determination scheme 2: in a case where A≤2B, t=0; in a case where 2B<A≤C, t=t1. C is the number of physical resource blocks (PRBs) included in the BWP, and t1 is the preset duration.

Determination scheme 3: in a case where A≤B, t=0; in a case where B<A≤2B, t=t1; in a case where 2B<A≤C, t=t2. C is the number of physical resource blocks (PRBs) included in the BWP, and t1 and t2 are preset durations.

Determination scheme 4: in a case where A≤B, t=0; in a case where B<A≤2B, t=t1; in a case where 2B<A≤3B, t=t2; in a case where 3B<A≤C, t=t3. C is the number of physical resource blocks (PRBs) included in the BWP, and t1, t2, and t3 are preset durations.

In some embodiments, in a case where the bandwidth of the physical channel is greater than the target bandwidth, the third processing duration is determined according to the number of receiving antennas of the first-type communication node. Exemplarily, there is a positive correlation between the third processing duration and the number of receiving antennas.

In some embodiments, in a case where the bandwidth of the physical channel is greater than the target bandwidth, the third processing duration is determined according to the subcarrier spacing of the physical channel. For example, the third processing duration at the 15 KHz subcarrier spacing is different from the third processing duration at the 30 KHz subcarrier spacing.

In some embodiments, in a case where the bandwidth of the physical channel is greater than the target bandwidth, the third processing duration is determined according to the code rate of the physical channel. Exemplarily, in the case where the bandwidth of the physical channel is greater than the target bandwidth, if the code rate of the physical channel is less than or equal to a code rate threshold, the third processing duration is equal to zero; or, if the code rate of the physical channel is greater than the code rate threshold, the third processing duration is greater than zero.

In some embodiments, in the case where the bandwidth of the physical channel is greater than the target bandwidth, the preset duration is indicated by the high-layer parameter.

The embodiments of the present disclosure determine the reasonable first processing duration by various parameters, to ensure that the first-type communication node can process the physical channel with a bandwidth greater than the target bandwidth completely, based on the first processing duration.

The embodiments of the present disclosure further provide a physical channel resource mapping method, which may be applied to the above receiving end or transmitting end. As shown in FIG. 6, the method includes S401 and S402.

S401, determine at least two resource block groups (RBGs), and a first RBG and a second RBG in the at least two RBGs are spaced by h RBGs, where h is greater than or equal to 1.

One resource block group (RBG) includes p physical resource blocks (PRBs), where p is greater than or equal to 1. For example, at 15 KHz subcarrier spacing, for 20 MHz bandwidth, p=8 or 2; for 15 MHz bandwidth, p=8 or 7. At 30 KHz subcarrier spacing, for 20 MHz bandwidth, p=4 or 3; for 15 MHz bandwidth, p=4 or 2.

In some embodiments, the first RBG and the second RBG are spaced by h RBGs, which means that an absolute value of a difference between a sequence number of the first RBG and a sequence number of the second RBG is equal to h+1. For example, the first RBG and the second RBG are spaced by 1 RBG. That is, the absolute value of the difference between the sequence number of the first RBG and the sequence number of the second RBG is equal to 2. The sequence number of the RBG corresponds to a frequency domain position in which the RBG is located.

In some embodiments, the sequence number of the first RBG is indicated by a frequency domain resource assignment (FDRA) field in downlink control information (DCI).

In S402, map a physical channel onto the above-mentioned at least two RBGs.

The physical channel is a physical channel scheduled by the transmitting node that is the first-type communication node. The physical channel may be a physical uplink shared channel (PUSCH), a physical downlink shared channel (PDSCH) or other physical channels. A baseband processing bandwidth of the physical channel of the first-type communication node does not exceed a target number of PRBs. At the 15 kHz subcarrier spacing, the target number of PRBs is equal to 25, and at the 30 kHz subcarrier spacing, the target number of PRBs is equal to 12 or 11.

In some embodiments, the physical channel is mapped onto the above-mentioned at least two RBGs according to a predefined condition. The predefined condition includes at least one of a transmission mode of the physical channel, an aggregation level of the physical channel, a cyclic prefix type of a subframe, a format of control information carried by the physical channel, and mapping scheme indication information.

In some embodiments, in a case where the physical channel is transmitted discontinuously in the frequency domain, the physical channel is mapped onto two RBGs that are spaced apart, and a span between the two RBGs in the frequency domain does not exceed the target number of PRBs.

Exemplarily, two RBGs are determined for one physical channel. The sequence number of the first RBG is i. In a case where the first RBG and the second RBG are spaced by 1 RBG, the sequence number of the second RBG is determined to be (i+2). The physical channel is mapped onto the RBG with sequence number i and the RBG with sequence number (i+2).

Based on this, in a case where the physical channel is mapped onto a plurality of RBGs that are not continuous in the frequency domain, only one RBG position needs to be indicated by resources to determine positions of other RBGs, thereby reducing an overhead of the resource indication without reducing the flexibility of the resource assignment.

The foregoing mainly introduces the solutions in the embodiments of the present disclosure from the perspective of methods. A physical channel processing apparatus is further shown below, which is used to perform the physical channel processing method in any of the above embodiments and possible implementations thereof. It can be understood that in order to implement the physical channel processing method, the physical channel processing apparatus includes corresponding hardware structures and/or software modules for performing various functions. Those skilled in the art should easily realize that, in combination with the exemplary algorithm steps described in the embodiments of the present disclosure, the present disclosure can be implemented in the form of hardware or a combination of hardware and computer software. Whether a certain function is performed via the hardware or the computer software-driven hardware depends on the specific application and restrictive conditions on design of the technical solutions. Professional technicians may use different methods to implement the described functions for each specific application, but such implementation should not be considered beyond the scope of the present disclosure.

In the embodiments of the present disclosure, the physical channel processing apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

FIG. 7 is a physical channel processing apparatus according to some embodiments, which is applied to a receiving end. The physical channel processing apparatus 70 includes a communication module 71 and a processing module 72.

The communication module 71 is configured to acquire scheduling information of a plurality of physical channels, where the scheduling information of the physical channel includes at least one of a time domain position, a bandwidth and a channel type of the physical channel.

The processing module 72 is configured to determine a physical channel to be processed from the plurality of physical channels according to the scheduling information of the plurality of physical channels.

In some embodiments, the processing module 72 is configured to determine a processing order of the plurality of physical channels according to bandwidths or channel types of the plurality of physical channels, in a case where the plurality of physical channels are transmitted in a same time slot; and determine the physical channel to be processed from the plurality of physical channels according to the processing order of the plurality of physical channels.

In some embodiments, the processing order of the plurality of physical channels is determined according to a monotonically increasing order or a monotonically decreasing order of the bandwidths of the plurality of physical channels.

In some embodiments, the channel type includes at least one of a system information block, a terminal-specific physical shared channel, a physical shared channel for paging, message 4 and a random access response; and the processing order of the plurality of physical channels satisfies at least one of: a rule that the terminal-specific physical shared channel is prioritized over the system information block in the processing order; a rule that the physical shared channel for paging is prioritized over the system information block in the processing order; a rule that the message 4 is prioritized over the system information block in the processing order; and a rule that the random access response is prioritized over the system information block in the processing order.

In some embodiments, the processing module 72 is further configured to determine a first processing duration of the physical channel according to at least one of a second processing duration of the physical channel, the bandwidth of the physical channel, a number of receiving antennas of a first-type communication node, a subcarrier spacing, a code rate and a high-layer parameter, where the first processing duration of the physical channel is a duration of processing the physical channel by the first-type communication node, and the second processing duration of the physical channel is a duration of processing the physical channel by a second-type communication node; and a processing bandwidth of the physical channel supported by the first-type communication node is less than a processing bandwidth of the physical channel supported by the second-type communication node.

In some embodiments, the first processing duration is determined according to a product of the second processing duration and an adjustment coefficient, and the adjustment coefficient is determined according to the bandwidth of the physical channel and a target bandwidth.

In some embodiments, the first processing duration is equal to a sum of the second processing duration and a third processing duration.

In some embodiments, the third processing duration is determined according to at least one of the bandwidth of the physical channel, the number of receiving antennas, the subcarrier spacing, the code rate and the high-layer parameter.

In some embodiments, in a case where the bandwidth of the physical channel is less than or equal to a target bandwidth, the third processing duration is equal to zero.

In some embodiments, the third processing duration is determined according to a product of a preset duration and an adjustment coefficient, and the adjustment coefficient is determined according to the bandwidth of the physical channel and a target bandwidth.

In some embodiments, the adjustment coefficient is a value obtained by rounding up a quotient of the target bandwidth divided by the bandwidth of the physical channel.

In some embodiments, in a case where the code rate of the physical channel is less than or equal to a code rate threshold, the third processing duration is equal to zero; or, in a case where the code rate of the physical channel is greater than the code rate threshold, the third processing duration is greater than zero.

In some embodiments, in a process of determining the physical channel to be processed from the plurality of physical channels according to the scheduling information of the plurality of physical channels in a case where the plurality of physical channels includes a first physical channel and a second physical channel, the processing module 72 is configured to:

in a case where a bandwidth of the first physical channel is greater than a target bandwidth, if a starting symbol of the second physical channel is later than an ending symbol of the first physical channel, the starting symbol of the second physical channel is earlier than or equal to a reference symbol, and the starting symbol of the second physical channel and the ending symbol of the first physical channel are not in a same time slot, determine to prioritize the processing of the first physical channel or determine to abandon the second physical channel, where the reference symbol is a K-th symbol after the ending symbol of the first physical channel, K is determined according to a first processing duration of the first physical channel and a second processing duration of the first physical channel, and K is a positive integer.

In some embodiments, the processing module 72 is configured to: in a case where a bandwidth of the first physical channel is greater than a target bandwidth, if a starting symbol of the second physical channel is later than an ending symbol of the first physical channel, the starting symbol of the second physical channel is earlier than or equal to a reference symbol, and the starting symbol of the second physical channel and the ending symbol of the first physical channel are not in a same time slot, determine the physical channel to be processed or determine a physical channel to be abandoned from the first physical channel and the second physical channel according to a channel type of the first physical channel and a channel type of the second physical channel, where the reference symbol is a K-th symbol after the ending symbol of the first physical channel, K is determined according to a first processing duration of the first physical channel and a second processing duration of the first physical channel, and K is a positive integer.

In some embodiments, the processing module 72 is configured to: in a case where a bandwidth of the first physical channel is greater than a target bandwidth, if a starting symbol of the second physical channel is earlier than or equal to a reference symbol, and an ending symbol of the second physical channel is later than or equal to a starting symbol of the first physical channel, determine the physical channel to be processed or determine a physical channel to be abandoned from the first physical channel and the second physical channel according to a channel type of the first physical channel and a channel type of the second physical channel, where the reference symbol is a K-th symbol after the ending symbol of the first physical channel, K is determined according to a first processing duration of the first physical channel and a second processing duration of the first physical channel, and K is a positive integer.

In some embodiments, the processing module 72 is configured to: if the first physical channel includes a system information block, and the second physical channel includes any one of a terminal-specific physical shared channel, a physical shared channel for paging, message 4 and a random access response, determine to prioritize the processing of the second physical channel or determining to abandon the first physical channel; or

if the first physical channel includes the physical shared channel for paging, and the second physical channel includes the terminal-specific physical shared channel or the system information block, determine to prioritize the processing of the first physical channel or determine to abandon the second physical channel; or

if the first physical channel includes the random access response or the message 4, the second physical channel includes the terminal-specific physical shared channel or the system information block, determine to prioritize the processing of the first physical channel or determine to abandon the second physical channel.

In some embodiments, the processing module 72 is configured to: in a case where a short message received by the receiving end indicates the receiving end to receive the warning information, if the first physical channel includes system information block 1, and the second physical channel includes any one of a terminal-specific physical shared channel, a physical shared channel for paging, message 4 and a random access response, determine to prioritize the processing of the first physical channel or determine to abandon the second physical channel; or

in a case where a short message received by the receiving end indicates the receiving end to receive the warning information, if the first physical channel includes any one of a terminal-specific physical shared channel, a physical shared channel for paging, message 4 and a random access response, and the second physical channel includes system information block 1, determine to prioritize the processing of the second physical channel or determine to abandon the first physical channel; or

if the first physical channel includes system information block 6, system information block 7 or system information block 8, and the second physical channel includes any one of a terminal-specific physical shared channel, a physical shared channel for paging, message 4, and a random access response, determine to prioritize the processing of the first physical channel or determine to abandon the second physical channel; or

if the first physical channel includes any one of a terminal-specific physical shared channel, a physical shared channel for paging, message 4 and a random access response, and the second physical channel includes system information block 6, system information block 7 or system information block 8, determine to prioritize the processing of the second physical channel or determine to abandon the first physical channel.

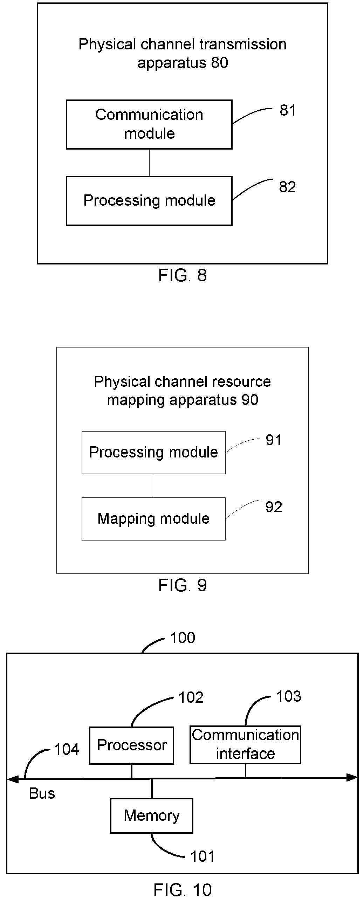

FIG. 8 is a physical channel transmission apparatus according to some embodiments, which is applied to a transmitting end. Referring to FIG. 8, the physical channel transmission apparatus 80 includes a communication module 81 and a processing module 82.

In some embodiments, the processing module 82 is configured to acquire scheduling information of a physical channel.

In some embodiments, the communication module 81 is configured to transmit the scheduling information of the physical channel, where the scheduling information of the physical channel includes at least one of a time domain position, a bandwidth, and a channel type of the physical channel.

In some embodiments, the communication module 81 is further configured to transmit the physical channel based on the scheduling information.

In some embodiments, the processing module 82 is configured to determine a first processing duration of the physical channel according to at least one of a second processing duration of the physical channel, the bandwidth of the physical channel, a number of receiving antennas of a first-type communication node, a subcarrier spacing, a code rate and a high-layer parameter, where the first processing duration of the physical channel is a duration of processing the physical channel by the first-type communication node, and the second processing duration of the physical channel is a duration of processing the physical channel by a second-type communication node; and a processing bandwidth of the physical channel supported by the first-type communication node is less than a processing bandwidth of the physical channel supported by the second-type communication node.

FIG. 9 is a physical channel resource mapping apparatus according to some embodiments. Referring to FIG. 9, the physical channel resource mapping apparatus 90 includes a processing module 91 and a mapping module 92.

The processing module 91 is configured to determine at least two resource block groups (RBGs), where a first RBG and a second RBG of the at least two RBGs are spaced by h RBGs, and h is greater than or equal to 1.

The mapping module 92 is configured to map a physical channel onto the at least two RBGs.

In some embodiments, the processing module 91 is configured to determine two RBGs, where a first RBG and a second RBG of the two RBGs are spaced by one RBG.

In some embodiments, a sequence number of the first RBG is indicated by a frequency domain resource assignment field in downlink control information.

In a case of implementing the functions of the above integrated modules in the form of hardware, the embodiments of the present disclosure further provide a possible structure of a communication apparatus. The communication apparatus is configured to perform the physical channel processing method provided by the embodiments of the present disclosure. As shown in FIG. 10, the communication apparatus 100 includes a communication interface 103, a processor 102 and a bus 104. In some embodiments, the communication apparatus may further include a memory 101.

The processor 102 may implement or execute various illustrative logical blocks, modules and circuits described in conjunction with the embodiments of the present disclosure. The processor 102 may be a central processing unit, a general-purpose processor, a digital signal processor, an application specific integrated circuit, a field programmable gate array or any other programmable logic device, a transistor logic device, a hardware component, or any combination thereof. The processor 102 may implement or execute various illustrative logical blocks, modules and circuits described in conjunction with the embodiments of the present disclosure. The processor 102 may also be a combination capable of implementing computing functions, for example, including a combination of one or more microprocessors, or a combination of a digital signal processor (DSP) and a microprocessor.

The communication interface 103 is configured to connect with other devices through a communication network. The communication network may be an Ethernet, a radio access network, a wireless local area network (WLAN), or the like.

The memory 101 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 101 may exist independently of the processor 102, and the memory 101 may be connected to the processor 102 through the bus 104, for storing instructions or program codes. When calling and executing the instructions or the program codes stored in the memory 101, the processor 102 is capable of realizing the physical channel processing method provided by the embodiments of the present disclosure.

As another implementation, the memory 101 may be integrated with the processor 102.

The bus 104 may be an extended industry standard architecture (EISA) bus or the like. The bus 104 may be classified into an address bus, a data bus, and a control bus, or the like. For the convenience of representation, only one thick line is used in FIG. 10 for representation, but it does not mean that there is only one bus or one type of bus.

Some embodiments of the present disclosure provide a computer-readable storage medium (e.g., a non-transitory computer-readable storage medium) having stored computer program instructions therein, where the computer program instructions, when executed on a computer, cause the computer to perform the physical channel processing method as described in any one of the above embodiments.

In an implementation, the computer may be the physical channel processing apparatus described above, and the present disclosure does not limit the form of the computer.

In some examples, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product including instructions, and the computer program product, when executed on a computer, causes the computer to perform the physical channel processing method as described in any one of the above embodiments.

The foregoing descriptions are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

**Claims**

1. A physical channel processing method, **characterized in that** the method is applied to a receiving end and comprises:

   acquiring scheduling information of a plurality of physical channels, wherein the scheduling information of the physical channel comprises at least one of a time domain position, a bandwidth and a channel type of the physical channel; and
   determining a physical channel to be processed from the plurality of physical channels according to the scheduling information of the plurality of physical channels.

2. The method according to claim 1, wherein determining the physical channel to be processed from the plurality of physical channels according to the scheduling information of the plurality of physical channels, comprises:

   determining a processing order of the plurality of physical channels according to bandwidths or channel types of the plurality of physical channels, in a case where the plurality of physical channels are transmitted in a same time slot; and
   determining the physical channel to be processed from the plurality of physical channels according to the processing order of the plurality of physical channels.

3. The method according to claim 2, wherein the processing order of the plurality of physical channels is determined according to a monotonically increasing order or a monotonically decreasing order of the bandwidths of the plurality of physical channels.

4. The method according to claim 2, wherein the channel type comprise at least one of a system information block, a terminal-specific physical shared channel, a physical shared channel for paging, message 4 and a random access response; and
the processing order of the plurality of physical channels satisfies at least one of:

a rule that the terminal-specific physical shared channel is prioritized over the system information block in the processing order;
a rule that the physical shared channel for paging is prioritized over the system information block in the processing order;
a rule that the message 4 is prioritized over the system information block in the processing order; and
a rule that the random access response is prioritized over the system information block in the processing order.

5. The method according to claim 1, further comprising:
determining a first processing duration of the physical channel according to at least one of a second processing duration of the physical channel, the bandwidth of the physical channel, a number of receiving antennas of a first-type communication node, a subcarrier spacing, a code rate and a high-layer parameter, wherein the first processing duration of the physical channel is a duration of processing the physical channel by the first-type communication node, and the second processing duration of the physical channel is a duration of processing the physical channel by a second-type communication node; and a processing bandwidth of the physical channel supported by the first-type communication node is less than a processing bandwidth of the physical channel supported by the second-type communication node.

6. The method according to claim 5, wherein the first processing duration is determined according to a product of the second processing duration and an adjustment coefficient, and the adjustment coefficient is determined according to the bandwidth of the physical channel and a target bandwidth.

7. The method according to claim 5, wherein the first processing duration is equal to a sum of the second processing duration and a third processing duration.

8. The method according to claim 7, wherein the third processing duration is determined according to at least one of the bandwidth of the physical channel, the number of receiving antennas, the subcarrier spacing, the code rate and the high-layer parameter.

9. The method according to claim 8, wherein in a case where the bandwidth of the physical channel is less than or equal to a target bandwidth, the third processing duration is equal to zero.

10. The method according to claim 8, wherein the third processing duration is determined according to a product of a preset duration and an adjustment coefficient, and the adjustment coefficient is determined according to the bandwidth of the physical channel and a target bandwidth.

11. The method according to claim 6 or 10, wherein the adjustment coefficient is a value obtained by rounding up a quotient of the target bandwidth divided by the bandwidth of the physical channel.

12. The method according to claim 8, wherein in a case where the code rate of the physical channel is less than or equal to a code rate threshold, the third processing duration is equal to zero; or, in a case where the code rate of the physical channel is greater than the code rate threshold, the third processing duration is greater than zero.

13. The method according to claim 1, wherein the plurality of physical channels comprises a first physical channel and a second physical channel; and
determining the physical channel to be processed from the plurality of physical channels according to the scheduling information of the plurality of physical channels, comprises:
in a case where a bandwidth of the first physical channel is greater than a target bandwidth, in response that a starting symbol of the second physical channel is later than an ending symbol of the first physical channel, the starting symbol of the second physical channel is earlier than or equal to a reference symbol, and the starting symbol of the second physical channel and the ending symbol of the first physical channel are not in a same time slot, determining to process the first physical channel or determining to abandon the second physical channel, wherein the reference symbol is a K-th symbol after the ending symbol of the first physical channel, a value of K is determined according to a first processing duration of the first physical channel and a second processing duration of the first physical channel, and K is a positive integer.

14. The method according to claim 1, wherein the plurality of physical channels comprises a first physical channel and a second physical channel; and
determining the physical channel to be processed from the plurality of physical channels according to the scheduling information of the plurality of physical channels, comprises:

in a case where a bandwidth of the first physical channel is greater than a target bandwidth, in response that a starting symbol of the second physical channel is later than an ending symbol of the first physical channel, the starting symbol of the second physical channel is earlier than or equal to a reference symbol, and the starting symbol of the second physical channel and the ending symbol of the first physical channel are not in a same time slot, determining the physical channel to be processed or determining a physical channel to be abandoned from the first physical channel and the second physical channel according to a channel type of the first physical channel and a channel type of the second physical channel, wherein the reference symbol is a K-th symbol after the ending symbol of the first physical channel, K is determined according to a first processing duration of the first physical channel and a second processing duration of the first physical channel, and K is a positive integer.

15. The method according to claim 1, wherein the plurality of physical channels comprises a first physical channel and a second physical channel; and determining the physical channel to be processed from the plurality of physical channels according to the scheduling information of the plurality of physical channels, comprises:

in a case where a bandwidth of the first physical channel is greater than a target bandwidth, in response that a starting symbol of the second physical channel is earlier than or equal to a reference symbol, and an ending symbol of the second physical channel is later than or equal to a starting symbol of the first physical channel, determining the physical channel to be processed or determining a physical channel to be abandoned from the first physical channel and the second physical channel according to a channel type of the first physical channel and a channel type of the second physical channel, wherein the reference symbol is a K-th symbol after the ending symbol of the first physical channel, K is determined according to a first processing duration of the first physical channel and a second processing duration of the first physical channel, and K is a positive integer.

16. The method according to claim 14 or 15, wherein determining the physical channel to be processed or determining the physical channel to be abandoned from the first physical channel and the second physical channel according to the channel type of the first physical channel and the channel type of the second physical channel, comprises:

in response that the first physical channel comprises a system information block, and the second physical channel comprises any one of a terminal-specific physical shared channel, a physical shared channel for paging, message 4 and a random access response, determining to process the second physical channel or determining to abandon the first physical channel; or
in response that the first physical channel comprises the physical shared channel for paging, and the second physical channel comprises the terminal-specific physical shared channel or the system information block, determining to process the first physical channel or determining to abandon the second physical channel; or
in response that the first physical channel comprises the random access response or the message 4, the second physical channel comprises the terminal-specific physical shared channel or the system information block, determining to process the first physical channel or determining to abandon the second physical channel.

17. The method according to claim 14 or 15, wherein the receiving end has a capability to receive warning information; and determining the physical channel to be processed or the physical channel to be abandoned from the first physical channel and the second physical channel according to the channel type of the first physical channel and the channel type of the second physical channel, comprises:

in a case where a short message received by the receiving end indicates the receiving end to receive the warning information, in response that the first physical channel comprises system information block 1, and the second physical channel comprises any one of a terminal-specific physical shared channel, a physical shared channel for paging, message 4 and a random access response, determining to process the first physical channel or determining to abandon the second physical channel; or
in a case where a short message received by the receiving end indicates the receiving end to receive the warning information, in response that the first physical channel comprises any one of a terminal-specific physical shared channel, a physical shared channel for paging, message 4 and a random access response, and the second physical channel comprises system information block 1, determining to process the second physical channel or determining to abandon the first physical channel; or
in response that the first physical channel comprises system information block 6, system information block 7 or system information block 8, and the second physical channel comprises any one of a terminal-specific physical shared channel, a physical shared channel for paging, message 4, and a random access response, determining to process the first physical channel or determining to abandon the second physical channel; or

in response that the first physical channel comprises any one of a terminal-specific physical shared channel, a physical shared channel for paging, message 4 and a random access response, and the second physical channel comprises system information block 6, system information block 7 or system information block 8, determining to process the second physical channel or determining to abandon the first physical channel.

18. A physical channel transmission method, **characterized in that** the method is applied to a transmitting end and comprises:

transmitting scheduling information of a physical channel, wherein the scheduling information of the physical channel comprises at least one of a time domain position, a bandwidth, and a channel type of the physical channel; and
transmitting the physical channel based on the scheduling information.

19. The method according to claim 18, further comprising:
determining a first processing duration of the physical channel according to at least one of a second processing duration of the physical channel, the bandwidth of the physical channel, a number of receiving antennas of a first-type communication node, a subcarrier spacing, a code rate and a high-layer parameter, wherein the first processing duration of the physical channel is a duration of processing the physical channel by the first-type communication node, and the second processing duration of the physical channel is a duration of processing the physical channel by the second-type communication node; and a processing bandwidth of the physical channel supported by the first-type communication node is less than a processing bandwidth of the physical channel supported by the second-type communication node.

20. A physical channel resource mapping method, **characterized by** comprising:

determining at least two resource block groups (RBGs), wherein a first RBG and a second RBG of the at least two RBGs are spaced by h RBGs, and h is greater than or equal to 1; and
mapping a physical channel onto the at least two RBGs.

21. The method according to claim 20, wherein determining the at least two RBGs, comprises:
determining two RBGs, wherein a first RBG and a second RBG of the two RBGs are spaced by one RBG.

22. The method according to claim 20, wherein a sequence number of the first RBG is indicated by a frequency domain resource assignment field in downlink control information.

23. A communication apparatus, **characterized by** comprising: a memory, a processor and computer program instructions stored on the memory and runnable on the processor, wherein the processor, upon executing the computer program instructions, implements the method according to any one of claims 1 to 22.

24. A computer-readable storage medium, wherein the computer-readable storage medium comprises computer program instructions; wherein the computer program instructions, upon executed on a computer, cause the computer to perform the method according to any one of claims 1 to 22.

FIG. 1

Acquire scheduling information of a plurality of physical channels — S101

According to the scheduling information of the plurality of physical channels, determine from the plurality of physical channels a physical channel to be processed — S102

FIG. 2

Transmission duration of the first physical channel

First processing duration

Second processing duration

L2

L3

L4

L0 after L3

L0 earlier than or equal to L4

L0

L1

Transmission duration of the second physical channel

FIG. 3

Transmission duration of the first physical channel

First processing duration

Second processing duration

L2

L3

L4

L0

L1

Transmission duration of the second physical channel

FIG. 4

Transmitting, by the transmitting end, scheduling information of a physical channel — S201

Transmitting, by the transmitting end, the physical channel based on the scheduling information — S202

FIG. 5

Determine at least two resource block groups (RBGs), where a first RBG and a second RBG of the at least two RBGs are spaced by h RBGs, and h is greater than or equal to 1 — S401

Map a physical channel onto the at least two RBGs — S402

FIG. 6

Physical channel processing apparatus 70

Communication module — 71

Processing module — 72

FIG. 7

FIG. 8

FIG. 9

FIG. 10

## INTERNATIONAL SEARCH REPORT

| International application No. |
| --- |
| **PCT/CN2023/141682** |

### A. CLASSIFICATION OF SUBJECT MATTER

H04W 72/54(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; VEN; CNKI; 3GPP: 降低能力, 物理信道, 调度, 时域, 带宽, 类型, 排列, 等级, 排行, 级别, 优先, 优选, 排序, 顺序, 物理资源块, 映射, 资源块组, PRB, RGB, RedCap, band, width, BW, channel, type, map, OFDM, priority

### C. DOCUMENTS CONSIDERED TO BE RELEVANT

| Category* | Citation of document, with indication, where appropriate, of the relevant passages | Relevant to claim No. |
| --- | --- | --- |
| X | INTEL CORPORATION. "On coverage recovery for RedCap UEs" *3GPP TSG RAN WG1 Meeting #103_E R 1-2007949*, 01 November 2020 (2020-11-01), sections 1-4 | 1-19, 23, 24 |
| X | NTT DOCOMO, INC. "Discussion on coverage recovery for RedCap" *3GPP TSG RAN WG1 #103-e R1-2008553*, 01 November 2020 (2020-11-01), sections 1-4 | 1-19, 23, 24 |
| X | CN 103369675 A (HUAWEI TECHNOLOGIES CO., LTD.) 23 October 2013 (2013-10-23) description, paragraphs [0033]-[0076], and figure 3 | 20-24 |
| A | CN 112673587 A (OPPO GUANGDONG MOBILE TELECOMMUNICATIONS CORP., LTD.) 16 April 2021 (2021-04-16) entire document | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 March 2024** | **07 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141682**

| Patent document cited in search report | | | Publication date (day/month/year) | Patent family member(s) | Publication date (day/month/year) |
|---|---|---|---|---|---|
| CN | 103369675 | A | 23 October 2013 | None | |
| CN | 112673587 | A | 16 April 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310129586